# EUROPEAN PATENT APPLICATION

(11) **EP 2 903 310 A1**
(43) Date of publication of application: **05.08.2015**
(21) Application number: 14305122.5
(22) Date of filing: 30.01.2014
(51) Int. Cl.: H04W 4/06, H04W 72/00, H04W 76/00, H04W 76/06

(54) **Multi-media broadcast/multi-media services**

(71) Applicant: ALCATEL LUCENT, 92100 Boulogne-Billancourt (FR)
(72) Inventor: Worrall, Chandrika, Swindon, Wiltshire SN5 7DJ (GB)
(74) Representative: Leppard, Andrew John

(57) **Abstract**

A wireless telecommunications network node method, a wireless telecommunications network node, a wireless telecommunications network user equipment method, wireless telecommunications network user equipment and computer program products are disclosed. The wireless telecommunications network node method comprises determining a change in status of at least one MBMS service provided to user equipment; and initiating transmission of a message to said user equipment to indicate said change in status. In this way, the user equipment is informed when there is a change in status of an MBMS service for that user equipment. This enables the user equipment to react quickly to a change in status of the MBMS service in order to maintain a high degree of service availability by, for example, deciding to request that the service be provided instead over a unicast bearer.

## Description

### FIELD OF THE INVENTION

The present invention relates to a wireless telecommunications network node method, a wireless telecommunications network node, a wireless telecommunications network user equipment method, wireless telecommunications network user equipment and computer program products.

### BACKGROUND

Wireless telecommunications networks are known. In a cellular system, radio coverage is provided by areas known as cells. A base station is located in each cell to provide the radio coverage. Traditional base stations provide coverage in relatively large geographical areas and the cells are often referred to as macro cells. It is possible to provide smaller sized cells with within a wireless telecommunications network. Such smaller sized cells are sometimes referred to as small cells, microcells, picocells femtocells. One way to establish a small cell is to provide a small cell base station that provides coverage having a relatively limited range compared to that of a macro cell. The transmission power of a small cell base station is relatively low and, hence, each small cell provides a small coverage area and covers, for example, an office or a home. Small cells may be provided within a macro cell or outside of the coverage area of any macro cells.

Information and data transmitted by the base station to the user equipment occurs on channels of radio carriers known as downlink carriers. Information and data transmitted by user equipment to the base station occurs on uplink data channels of radio carriers known as uplink carriers.

Services such as, for example, multi-media broadcast/ multi-media services (MBMS) may be provided to user equipment. In particular, user equipment which are capable of receiving services may indicate those services which may be of interest to the user equipment. The user equipment will then attempt to receive the services of interest on carriers which are indicated as carrying those services of interest.

Although techniques exist for providing MBMS to user equipment, unexpected consequences can occur.

Accordingly, it is desired to provide improved techniques for providing MBMS to user equipment.

### SUMMARY

According to a first aspect, there is provided a wireless telecommunications network node method, comprising: determining a change in status of at least one MBMS service provided to user equipment; and initiating transmission of a control message to the user equipment to indicate the change in status.

The first aspect recognizes that MBMS is seen as suitable for supporting group communication from a radio resource efficiency perspective. This is because group communication requires the transmission of the same information to a large number of receiving group members. Such group communication is particularly suited to public safety uses (i.e. uses by the emergency services or other government departments) and service continuity is particularly important in such public safety situations since the loss of service can have potentially disastrous consequences. However, the first aspect also recognizes that service continuity is not a high priority in existing MBMS implementations. In particular, an MBMS service may be stopped by the network due to allocation and retention priority (ARP) or counting (i.e. fewer than a predetermined number of user equipment within a cell require the MBMS service). In those circumstances, the user equipment needs to detect that the service is no longer available and then request the service be provided instead using a unicast bearer. This may result in data interruption since the user equipment will take a period of time to determine that the service is no longer being provided and to request the service over unicast. Accordingly, a method for a wireless telecommunications network node may be provided. The method may comprise the step of determining a change in status of one or more MBMS services provided to user equipment. The method may also comprise the step of initiating transmission of a control message to the user equipment to indicate the change in status. In this way, the user equipment is informed when there is a change in status of an MBMS service for that user equipment. This enables the user equipment to react quickly to a change in status of the MBMS service in order to maintain a high degree of service availability by, for example, deciding to request that the service be provided instead over a unicast bearer.

In one embodiment, the change in status comprises at least one of a stop, a start and a suspend of an MBMS service. Accordingly, various changes in status of the MBMS service maybe indicated.

In one embodiment, the suspend of an MBMS service includes an indication of a period for which the MBMS service is to be suspended. Providing a period associated with the suspension enables the user equipment to determine whether an acceptable level of the service can be maintained during the suspension of the service, thereby avoiding the need to establish a unicast bearer. If the period of suspension is too long, then a unicast bearer may be established in order to maintain service continuity.

In one embodiment, the step of determining comprises determining an upcoming change in status and the step of initiating transmission comprises initiating transmission of the message to user equipment to indicate the upcoming change in status. Accordingly, the indication may not only indicate when a change of status occurs, it may also indicate that a change in status will occur in the future. This enables the user equipment to take ameliorative action prior to the change in status even occurring.

In one embodiment, the control message provides an indication of the at least one MBMS service with which the change in status is associated.

In one embodiment, the indication comprises at least one of an indication of a session of an MBMS service, an indication of an MBMS service and an indication of a group of user equipment subscribed to an MBMS service.

In one embodiment, the indication of a session of an MBMS service comprises a temporary mobile group identifier for that session.

In one embodiment, the indication of an MBMS service comprises a logical channel identifier for that MBMS service.

In one embodiment, the control message comprises one of a control channel and a traffic channel message.

In one embodiment, the control message comprises a radio resource connection message transmitted using an MBMS point-to-multipoint Control Channel.

In one embodiment, the control message comprises a multicast channel scheduling information message transmitted using an MBMS point-to-multipoint Transport Channel.

In one embodiment, the control message comprises an indication field encoding the indication and a status field encoding the change in status.

In one embodiment, the control message is encoded within a multicast channel scheduling information Medium Access Control control element.

In one embodiment, the network node comprises one of a Multi-cell/ multicast Coordination Entity and an application server. Accordingly, the multi-cell/multicast coordination entity or the application server may determine that the change in status is occurring/ to occur and may initiate transmission of the control message by providing information to a base station which causes that base station to transmit the control message to the user equipment.

According to a second aspect, there is provided a wireless telecommunications network node, comprising: determining logic operable to determine a change in status of at least one MBMS service provided to user equipment; and logic operable to initiate transmission of a control message to the user equipment to indicate the change in status.

In one embodiment, the change in status comprises at least one of a stop, a start and a suspend of an MBMS service.

In one embodiment, the suspend of an MBMS service includes an indication of a period for which the MBMS service is to be suspended.

In one embodiment, the determining logic is operable to determine an upcoming change in status and the logic is operable to initiate transmission of the message to user equipment to indicate the upcoming change in status.

In one embodiment, the control message provides an indication of the at least one MBMS service with which the change in status is associated.

In one embodiment, the indication comprises at least one of an indication of a session of an MBMS service, an indication of an MBMS service and an indication of a group of user equipment subscribed to an MBMS service.

In one embodiment, the indication of a session of an MBMS service comprises a temporary mobile group identifier for that session.

In one embodiment, the indication of an MBMS service comprises a logical channel identifier for that MBMS service.

In one embodiment, the control message comprises one of a control channel and a traffic channel message.

In one embodiment, the control message comprises a radio resource connection message transmitted using an MBMS point-to-multipoint Control Channel.

In one embodiment, the control message comprises a multicast channel scheduling information message transmitted using an MBMS point-to-multipoint Transport Channel.

In one embodiment, the control message comprises an indication field encoding the indication and a status field encoding the change in status.

In one embodiment, the control message is encoded within a multicast channel scheduling information Medium Access Control control element.

In one embodiment, the network node comprises one of a Multi-cell/ multicast Coordination Entity and an application server.

According to a third aspect, there is provided a wireless telecommunication network user equipment method, comprising: receiving a control message indicating a change in status of at least one MBMS service; and determining whether the change in status relates to an MBMS service intended for the user equipment and, if so, responding to the change in status.

In one embodiment, when the change in status comprises one of a stop and a suspend of an MBMS service intended for the user equipment, the step of responding comprises determining whether to request the MBMS service and, if so, requesting the MBMS service.

In one embodiment, when the change in status comprises a start of an MBMS service intended for the user equipment, the step of responding comprises determining whether to receive the MBMS service and, if so, receiving the MBMS service.

According to a fourth aspect, there is provided wireless telecommunication network user equipment, comprising: reception logic operable to receive a control message indicating a change in status of at least one MBMS service; and determining logic operable to determine whether the change in status relates to an MBMS service intended for the user equipment and, if so, to respond to the change in status.

In one embodiment, when the change in status comprises one of a stop and a suspend of an MBMS service intended for the user equipment, the determining logic is operable to determine whether to request the MBMS service and, if so, to request the MBMS service.

In one embodiment, when the change in status comprises a start of an MBMS service intended for the user equipment, the determining logic is operable to determine whether to receive the MBMS service and, if so, to receive the MBMS service.

According to a fifth aspect, there is provided a computer program product operable, when executed on a computer, to perform the method steps of the first or the third aspect.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates main components of a wireless telecommunications network providing MBMS;
Figure 2 illustrates schematically E-MBMS control plane architecture in more detail;
Figure 3 illustrates an existing multi-cast channel scheduling information medium access control control element; and
Figure 4 illustrates an extended multi-cast channel scheduling information medium access control control element of one embodiment.

### DESCRIPTION OF THE EMBODIMENTS

### Overview

Before discussing the embodiments in any more detail, first an overview will be provided. Embodiments provide a mechanism for providing user equipment with control information related to one or more ongoing or scheduled multi-media broadcast/multi-media services (MBMS) services quickly. Typically, a message is used to indicate the control information (or additional service information) for group communication using one or more MBMS services. Providing such control information quickly can be important in many environments such as, for example, when MBMS services are being used for public safety purposes such as to provide services to the emergency services or government departments. The control information may include data related to currently scheduled or future scheduled services delivered using MBMS. The control information may be provided for a particular group, a particular service or a particular session of a service. The control information may indicate a change in status of one or more services (such as whether a service for user equipment or a group of user equipment has or is due to be stopped, started or paused). This then enables the user equipment to take ameliorative action, should it be required to maintain the service, possibly through being provided with the service on a unicast bearer, thereby ensuring service continuity. Ensuring such service continuity is not possible using existing techniques since no mechanism exists to advise the user equipment of the change in status of the services and is instead inferred by the user equipment when the change in status occurs, which can lead to a loss of service continuity.

The control information is typically received by a base station from a multi-cell/ multicase coordination entity (MCE). The control information is either generated at the MCE or is received from the core network or an application server (AS).

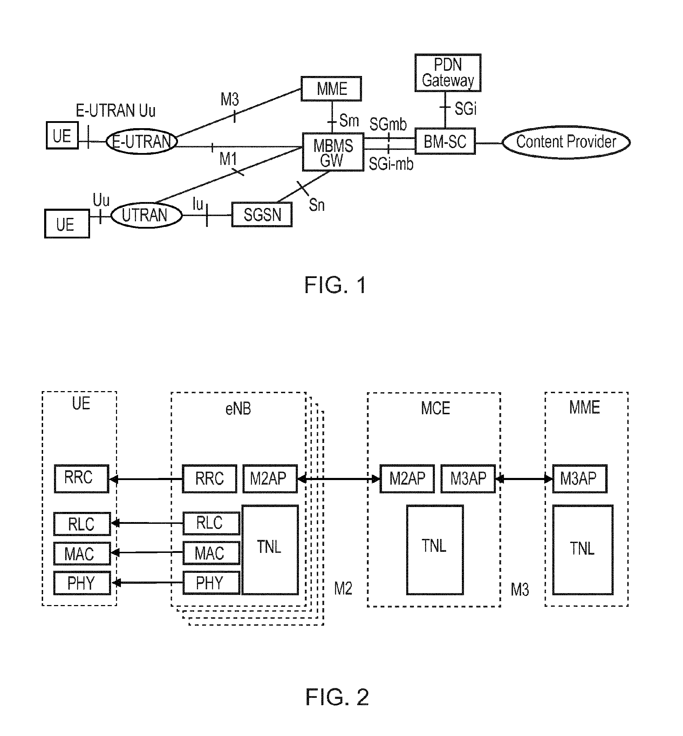

By way of background, Figure 1 illustrates schematically reference architecture for an evolved packet system with the Evolved Universal Terrestrial Radio Access Network (E-UTRAN). As can be seen from Figure 1, a content provider provides a broadcast multimedia service centre (BM-SC) with service data to be transmitted to members or subscribers of a user group. The BM-SC typically performs encryption of the content to be routed to group users. The BM-SC provides an MBMS gateway with control and traffic signalling and the MBMS gateway is operable to provide traffic and control signalling to the E-UTRAN and mobility management entity (MME) respectively. When performing MBMS communication, the E-UTRAN includes a multi cast entity (MCE) coordinator.

Figure 2 illustrates schematically the E-MBMS control plane architecture in more detail.

Although various messages could be used to provide the control information, one embodiment extends the multi-cast channel scheduling information medium access control control element (MSI MAC CE) to indicate the control information. The use of the extended MSI MAC CE to provide the control information is typically configured by the MCE or the AS for a service scheduled on a physical multi-cast channel (PMCH) and is signalled to the user equipment using radio resource connection (RRC) signalling on the MBMS point-to-multipoint control channel (MCCH) from the base station. Although various different messages may be utilised to transmit the control information for MBMS services, such as by using a Radio Resource Control (RRC) message transmitted over the MCCH, utilising the MSI MAC CE transmitted over the MBMS point-to-multipoint Traffic Channel (MTCH) is particularly beneficial since this message can be configured to be transmitted with a periodicity of as short as 80 milliseconds. When transmitting using the RRC messaging, the periodicity is much longer and can be as much as 5.12 - 10.24 seconds.

### MSI MAC CE

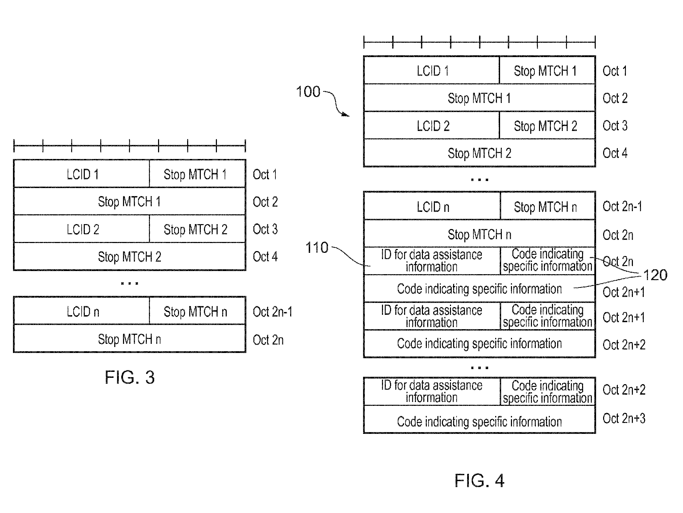

Figure 3 illustrates the existing MSI MAC CE which is used to inform the user equipment of scheduling information of MTCHs on a particular MCH. The MSI MAC CE is identified by a MAC packet data unit (PDU) sub-header with a logical channel identifier field set to 11110. This CE has a variable size. The scheduling information of a list of MTCHs scheduled on the corresponding MCH is provided in the MSI MAC CE.

As can be seen in Figure 3, a number of fields are provided for each MTCH:
LCID - this field indicates the logical channel identifier of the MTCH. The length of this field is 5 bits; and
Stop MTCH - this field indicates the ordinal number of the sub-frame within the MCH scheduling period, counting only the sub-frames allocated to the MCH, where the corresponding MTCH stops. A value of 0 corresponds to the first sub-frame. The length of this field is 11 bits. A special stop MTCH value of 2047 indicates that the corresponding MTCH is not scheduled. The value range from 2043 to 2046 is reserved.

### Extended MSI MAC CE

Although the existing MSI MAC CE is limited to the scheduling information of the MTCHs on the corresponding MCH, embodiments extend the MSI MAC CE to include additional control information which is associated with one or more particular services.

In particular, the control information may indicate the suspension of a service due to counting or an ARP decision by the MCE. That is to say, when the MCE determines that an MBMS service is to be suspended for a period, this may be indicated to the user equipment. Similarly, when a service is to be stopped or is unavailable over MBMS the user equipment may be informed of this. Also, should the arrival of a new service occur then the user equipment may also be informed of this. Likewise, the multiplexing of multiple services (TMGIs) on the same MBMS bearer may also be indicated to the user equipment.

This control information to be included in the extended MSI MAC CE for transmission from a base station to the user equipment may originate at the MCE, GCSE-AS, MBSC or other application server or core network node. Where the control information originates at other than the base station, providing this to the base initiates transmission of the extended MSI MAC CE to the user equipment.

The control information identifies the service or services, together with the associated change in status. Typically, the control information consists of the logical channel ID allocated to the corresponding service (for example, corresponding to the TMGI). Further code points may be included indicating whether the user equipment is being informed of the start of a service, the suspension of a service due to counting, the suspension of a service due to an ARP decision, the stop of a service, the arrival of new media, etc. corresponding to the associated service.

The additional control information included in the extended MSI MAC CE can be for a particular group which is identified by a group identity (for example, a group could be all or a particular portion of ambulance crew or police or government agency workers sharing a group identity). The information included in the extended MSI MAC CE can include this group identity to indicate whether a service has been started, stopped, suspended or whether there is new media within an MBMS service for that particular group.

The extended MSI MAC CE may also include control information for a particular service identified by an LCID or TMGI or a particular session which is identified by an LCID and a session ID.

This control information to be included in the extended MSI MAC CE is provided to the corresponding base station by the MCE. Hence, this guarantees synchronous signalling in the Multicast-broadcast single-frequency network (MBSFN) area.

As mentioned above, the extended MSI MAC CE is configurable per MCH and the configuration is signalled to the user equipment via RRC signalling (for example, in MCCH, together with other configuration information). The extended MSI MAC CE can be used with either the same LCID of 11110, or a new LCID maybe allocated to differentiate the extended MSI MAC CE from that of the existing MSI MAC CE.

Figure 4 illustrates an example of the extended MSI MAC CE format 100. The ID field 110 is used to encode the identity of the group, of the service or of the session, etc. to which the following information provided in the information field 120 relates. The information field 120 typically includes a code which indicates the stop of a service due to counting, stop of the services, start of a service, etc. Where more than one change in status occurs, each of these may be identified by its own ID field 110 and information field 120, as illustrated in Figure 4.

The information provided in the extended MSI MAC CE may also be included in the next MCCH update.

This enables changes in the status of services to be signalled quickly to user equipment. The user equipment may then decode the extended MSI MAC CE and identify changes occurring to services to which the user equipment is subscribed. The user equipment may then decide whether those changes are inconsistent with the level of service continuity associated with that service and, if so, can request that the service is instead provided over a unicast bearer.

Hence, embodiments provide a method and procedure for providing additional data assistance information of an ongoing or future service in support of group communication. The information is provided to the UE quickly such that the UE can make the appropriate action to such as establishment of unicast connection in order to minimise the service interruption. The information is provided to the UE quickly in such a way as to minimise the service interruption. This improves the network flexibility in making scheduling decisions.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/ or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A wireless telecommunications network node method, comprising:
determining a change in status of at least one MBMS service provided to user equipment; and
initiating transmission of a control message to said user equipment to indicate said change in status.

2. The method of claim 1, wherein said change in status comprises at least one of a stop, a start and a suspend of an MBMS service.

3. The method of claim 2, wherein said suspend of an MBMS service includes an indication of a period for which said MBMS service is to be suspended.

4. The method of any preceding claim, wherein said step of determining comprises determining an upcoming change in status and said step of initiating transmission comprises initiating transmission of said message to user equipment to indicate said upcoming change in status.

5. The method of any preceding claim, wherein said control message provides an indication of said at least one MBMS service with which said change in status is associated.

6. The method of claim 5, wherein said indication comprises at least one of an indication of a session of an MBMS service, an indication of an MBMS service and an indication of a group of user equipment subscribed to an MBMS service.

7. The method of claim 6, wherein said indication of a session of an MBMS service comprises a temporary mobile group identifier for that session.

8. The method of claim 6, wherein said indication of an MBMS service comprises a logical channel identifier for that MBMS service.

9. The method of any preceding claim, wherein said control message comprises one of a control channel and a traffic channel message.

10. The method of any preceding claim, wherein said control message comprises at least one of a radio resource connection message transmitted using an MBMS point-to-multipoint Control Channel and a multicast channel scheduling information message transmitted using an MBMS point-to-multipoint Transport Channel.

11. The method of any preceding claim, wherein said control message is encoded within a multicast channel scheduling information Medium Access Control control element.

12. A wireless telecommunications network node, comprising:
determining logic operable to determine a change in status of at least one MBMS service provided to user equipment; and
logic operable to initiate transmission of a control message to said user equipment to indicate said change in status.

13. A wireless telecommunication network user equipment method, comprising:
receiving a control message indicating a change in status of at least one MBMS service; and
determining whether said change in status relates to an MBMS service intended for said user equipment and, if so, responding to said change in status.

14. Wireless telecommunication network user equipment, comprising:
reception logic operable to receive a control message indicating a change in status of at least one MBMS service; and
determining logic operable to determine whether said change in status relates to an MBMS service intended for said user equipment and, if so, to respond to said change in status.

15. A computer program product operable, when executed on a computer, to perform the method steps of any one of claims 1 to 11 and 13.

## Amended claims

### Amended claims in accordance with Rule 137(2) EPC.

1. A wireless telecommunications network node method, comprising:
determining a change in status of at least one MBMS service provided to user equipment; and
initiating transmission of a control message to said user equipment to indicate said change in status, wherein said control message provides an indication of said at least one MBMS service with which said change in status is associated, said indication comprising indication of a group of user equipment subscribed to an MBMS service and an indication of a future MBMS service for said group of user equipment.

2. The method of claim 1, wherein said change in status comprises at least one of a stop, a start and a suspend of an MBMS service.

3. The method of claim 2, wherein said suspend of an MBMS service includes an indication of a period for which said MBMS service is to be suspended.

4. The method of any preceding claim, wherein said step of determining comprises determining an upcoming change is status and said step of initiating transmission comprises initiating transmission of said message to user equipment to indicate said upcoming change in status.

5. The method of claim 4, wherein said indication comprises an indication of a session of an MBMS service.

6. The method of claim 5, wherein said indication of a session of an MBMS service comprises a temporary mobile group identifier for that session.

7. The method of claim 5, wherein said indication of an MBMS service comprises a logical channel identifier for that MBMS service.

8. The method of any preceding claim, wherein said control message comprises one of a control channel and a traffic channel message.

9. The method of any preceding claim, wherein said control message comprises at least one of a radio resource connection message transmitted using all MBMS point-to-multipoint Control Channel and a multicast channel scheduling information message transmitted using an MBMS point-to-multipoint Transport Channel.

10. The method of any preceding claim, wherein said control message is encoded within a multicast channel scheduling information Medium Access Control control element.

11. A wireless telecommunications network node, comprising:
determining logic operable to determine a change in status of at least one MBMS service provided to user equipment; and
logic operable to initiate transmission of a control message to said user equipment to indicate said change in status, wherein said control message provides an indication of said at least one MBMS service with which said change in status is associated, said indication comprising indication of a group of user equipment subscribed to an MBMS service and an indication of a future MBMS service for said group of user equipment.

12. A wireless telecommunication network user equipment method, comprising:
receiving a control message indicating a change in status of at least one MBMS service, wherein said control message provides an indication of said at least one MBMS service with which said change in status is associated, said indication comprising indication of a group of user equipment subscribed to an MBMS service and an indication of a future MBMS service for said group of user equipment; and
determining whether said change in status relates to an MBMS service intended for said user equipment and, if so, responding to said change in status.

13. Wireless telecommunication network user equipment, comprising:
reception logic operable to receive a control message indicating a change in status of at least one MBMS service, wherein said control message provides an indication of said at least one MBMS service with which said change in status is associated, said indication comprising indication of a group of user equipment subscribed to an MBMS service and an indication of a future MBMS service for said group of user equipment; and
determining logic operable to determine whether said change in status relates to an MBMS service intended for said user equipment and, if so, to respond to said change in status.

14. A computer program product operable, when executed on a computer, to perform the method steps of any one of claims to 10 and 12.
